# EUROPEAN PATENT APPLICATION

(11) **EP 4 159 315 A2**
(43) Date of publication of application: **05.04.2023**
(21) Application number: 22201805.3
(22) Date of filing: 27.02.2020
(51) Int. Cl.: B01L 3/00

(54) **SYSTEM AND APPARATUS FOR AUTOMATED SAMPLE EXTRACTING OF BIOLOGICAL SPECIMENS**

(62) Divisional of application: 20922418.7
(71) Applicant: MOLARRAY RESEARCH INC., Richmond Hill, ON L4B 3K1 (CA)
(72) Inventor: NG, Kai On, Markham, L3P 7X6 (CA); CHEN, Yuanji, Richmond Hill, L4S 1G4 (CA); LIU, Zonghua, Scarborough, M1B 2P4 (CA)
(74) Representative: Doherty, William

(57) **Abstract**

An automated biologic sample extracting system from a set of biological samples with a small footprint with minimal movement of the set of consumables, thereby reducing potential contamination during the extraction process. The extracting system comprising a set of reaction tubes, a storage unit to store a set of consumables; a sample preparation unit; a sample extraction unit; a waste unit; a plurality of robots to move tubes, samples, and boxes, and a programmable control system programmed to process samples in a serial pattern in which a series of samples follow one another to be processed in a time sequence and in succession so that it keeps a fixed processing turnaround time of each sample no matter when a sample would start the process.

## Description

### FIELD OF THE INVENTION

The present invention relates generally to automatic sample extraction system for numerous analytic processing systems and techniques.

### BACKGROUND OF THE INVENTION

Sample preparation and extraction for analytic processing systems involves manipulation and processing of multiple biologic samples in a substantially sterile environment. It is important to process the samples without contamination otherwise the results will be inaccurate, compromised and potentially lead to false positive in subsequent analytic processing and testing.

Biologic samples can be prepared for numerous analytic processing systems, such as a polymerase chain reaction "PCR" system. "PCR" is a technique used in molecular biology to amplify a single copy or a few copies of a piece of nucleic acid such as deoxyribonucleic acid "DNA" or ribonucleic acid "RNA", across several orders of magnitude, generating thousands to millions of copies of a particular sequence.

"PCR" is typically considered to amplify a focused segment of nucleic acid, useful in the diagnosis and monitoring of genetic diseases, studying the function of targeted segments, forensic studies for identification of individuals, and other related uses.

Another example of an analytic processing system that may utilize samples prepared by the preferred system is enzyme-linked immunosorbent assay (ELISA), which detects antigen or antibody for immunology and toxicology. Purity of the biologic samples is important for the analytic processing systems to produce accurate results in the subsequent analytic processing systems. A problem with preparation of samples for analytic processing systems, such as PCR or ELISA enzyme-linked immunosorbent assay is that the preparation process risks contamination when the amplification vessels are open, and the samples are being prepared. In addition, during the movement of the samples and when the caps are removed, the possibility of spillage, droplet formation and/or aerosols can cause contamination risk. Cross contamination can also occur during introduction and removal of a pipette from the system due to the movement of the contaminated pipettes above open sample containers. Such contamination will quickly lead to false results or erroneous and incorrect test results. Care must be taken to prevent such contamination.

Physical separation between sample preparation, amplification and detection areas has been customarily used to limit contamination between samples and from the surrounding environment. Such measures are quite cumbersome, expensive and require rigorous training to prevent transfer of materials to lab coats, gloves, pipettes or laboratory equipment between such segregated areas.

The biologic material handling systems include a moving pipette assembly with several individual pipettes mounted to a movable frame that is movable in longitudinal and lateral directions relative to sample trays including sample tubes that are preferably loaded with biological materials, such as whole blood, serum, or other biological materials for nucleic acid amplification. The numerous stops and starts of the pipette assembly over the sample tubes, often after the pipettes are placed into contact with the samples in the sample tubes, results in extensive potential contamination of all of the samples on the sample tray when the robotic frame moves, starts, stops and vibrates over the sample tubes creating potential for cross-contamination and failure of the expensive and precise testing.

It is desirable to design a sample handling system that reduces or eliminates the risk of cross-contamination created when the contaminated pipettes move, stop and start under potential vibratory loads over the sample tray. The sample tubes also require the samples and other materials, such as buffers, in the sample tubes to enter and exit through a top opening, which further creates potential contamination issues.

Many methods for processing samples involve steps of shaking, heating, applying a magnetic field to the magnetic bead-target compounds complex, and liquid waste drainage. Conventionally, these steps are performed at independent and separate stations, for example using a shaker, a magnetic separation device, a heater and a waste container.

The abovementioned conventional procedures of shaking, heating, magnetic bead separation and liquid waste drainage require separate stations and consume excessive space on a workbench. The utilization of these separate stations also requires samples to be manually handled and transported from one station to another station, which is time consuming and generates the potential for cross contamination between samples. Accordingly, there is a need to address these problems.

### SUMMARY OF THE INVENTION

The present invention relates generally to an automated system for isolating and extracting target compounds from biological specimens. In particular, the present invention is an automatic sample extraction system, which can be used to prepare samples for numerous analytic processing systems and techniques, such as PCR system.

The system comprises of units configured to process samples in succession so that it keeps a fixed processing turnaround time of each sample no matter when a sample would start the process. The present invention processes samples in a serial pattern in which a series of samples follow one another to be processed in a time sequence. The major units are controlled by a computer to achieve automatic nucleic acid extraction.

The system comprises of five different units: a storage unit, a sample preparation unit, a sample extraction unit, a waste unit, and a reaction tube unit. All units are configured to minimize the sample movement in the process and reduce the contamination risk.

The reaction tube unit is an especially designed reaction tube that has an upper section for sample extraction and a lower section to receive waste liquid from the upper section. The two section are separated by a valve.

The storage unit stores boxes of consumables that are easily accessible. The storage unit also stores the sample tubes and magnetic beads. The magnetic beads are kept in a cooler.

The sample preparation unit comprises of a rotary table that has a transferring unit comprising of a sample tube rack to receive a sample tube and a reaction tube rack to receive a reaction tube right next to each other. The rotary table can also hold boxes of consumables and reaction tubes for each quick access. The sample preparation unit also has a rack of samples to hold sample tubes. The rack of samples is located on one side of the rotary table. The rotary table rotates to position the sample rack next to the sample tube rack on the transferring unit and then the sample tube transferred. This minimizes the sample movement. The sample preparation unit also comprises of a cooler to hold magnetic beads.

The sample extraction unit, which is located close to the rotary table, comprises of a set of shakers to receive and shake the reaction tubes, and a set of magnetic racks with magnets to manipulate the magnetic beads inside the reaction tubes.

The disposal unit comprises of separate bins for disposal of the consumables, disposal of waste liquids and tubes.

The sample preparation unit is designed to have a minimum sample movement to reduce contamination risk. A sample has to be moved from a sample tube into a reaction tube, for extraction process. To minimize the sample movement, a sample tube rack and a reaction tube rack are placed next to each other on the rotary table. The sample robot moves a sample tube from the sample tube box into the sample tube rack and also moves a reaction tube from the reaction tube box in the reaction tube rack. Next, the sample robot prepares the sample in the reaction tube by adding different types of solutions, such as Lysis buffer.

Once the sample in the reaction tube is prepared, the rotary table rotates to bring the reaction tube rack with the reaction tube close to the sample extraction unit.

A reaction robot grabs and moves the reaction tube from the rotary table onto a shaker in the sample extraction unit. The extraction unit comprises of individual shakers and individual magnetic units. Each shaker with a reaction tube can be positioned at different distances from the magnetic units for changing the intensity of the magnets and the positioning of the magnetic beads inside the reaction tube.

First, the reaction tube is located at a position that the magnetic effect is small, and is shaken. Then a magnetic beads and binding buffer are added to the solution and the reaction tube is further shaken.

Next, the reaction tube is moved to a second position, such that the reaction tube is located between the vertical legs of the L shaped magnets. The magnets pull the magnetic beads that are holding onto the sample towards the wall of the tube. The waste valve is opened, and the waste liquid is discarded into the second compartment of the reaction tube. Valve is closed, a wash buffer is added, and the tube is shaken. The shaker is then moved back close to the magnets to hold the magnet onto the tube walls, while the valve is opened to discard the waste liquid into the second compartment. This process may be repeated several times (two or more washes) depending on the sample requirements to wash out impurities.

Once the sample is purified, an Elution buffer is added to the sample in the reaction tube and the tube is shaken to separate the sample from the magnetic beads. The reaction tube is then moved to a third position, where the magnetic beads attach completely towards the top portion of the tube, thereby allowing for easy removal of the sample by a pipette. The reaction robot grabs a pipette and removes the purified sample from the reaction tube and places it in a purified sample tube with a lid for storage.

Consolidation of each of these units on the frame reduces the footprint of the sample preparation system and reduces the need to transport associated components over relatively large distances, reducing the potential contamination.

Therefore, it is an object of the present invention to provide a biologic sample extraction system and method that reduces and eliminates the risk of contamination.

It is further another object of the present invention to process samples in a serial pattern in which a series of samples follow one another to be processed in a time sequence.

It is another object of the present invention to provide a fully automated sample extraction to automatically process a large number of biological samples per day in a minimum manual operation and a short operation time.

It is another object of the present, to provide a system to reduces cross contamination by reducing transferring time of the pipette and liquids.

### BRIEF DESCRIPTION OF THE DRAWINGS

Embodiments hereinafter will be described in conjunction with the appended drawings provided to illustrate and not to limit the scope of the claims, wherein like designations denote like elements, and in which:
FIG. 1 is a front perspective view of the biologic sample extraction system of the present invention;
FIG. 2 is a front view of the biologic sample extraction system of the present invention;
FIG. 3 is a perspective left side view of the biologic sample extraction system of the present invention;
FIG. 4 is a top view of the biologic sample extraction system of the present invention;
FIG. 5 is a perspective view of the rotary table of the present invention;
FIG. 6A is a front perspective view of a shaker and a reaction tube of the present invention;
FIG. 6B is a front perspective view of a reaction tube of the present invention;
FIG. 7 is a front view of the sample extraction unit of the present invention associated with the shaker pusher system;
FIG. 8 is a side view of the sample extraction unit of the present invention;
FIG. 9 is a top view of the sample extraction unit of the present invention;
FIG. 10A shows a reaction tube of the present invention;
FIG. 10B shows a reaction tube of the present invention;
FIG. 10C shows a reaction tube of the present invention;
FIG. 10D shows a reaction tube of the present invention;
FIG. 11 is a perspective view of the L-shaped magnet rack of the present invention showing the reaction tube in position 1 therein;
FIG. 12 is a perspective view of the L-shaped magnet rack showing the reaction tube in position 2;
FIG. 13 is a perspective view of the L-shaped magnet rack showing the reaction tube in position 3 therein;
FIG. 14 is a perspective view of the present invention showing the disposal system;
FIG. 15A is a side plan of the shaker pusher of the system;
FIG. 15B is a top plan of the shaker pusher of the system;
FIG. 16 is a perspective view of the robot system of the present invention;
FIG. 17 is a front view showing the robot system of the present invention;
FIG. 18 is a front view of the robot system of the present invention;
FIG. 19 is a top view of the robot system of the present invention;
FIG. 20A shows the procedure of nucleic acid extraction in the system;
FIG. 20B shows the procedure of nucleic acid extraction in the system;
FIG. 20C shows the procedure of nucleic acid extraction in the system, and
FIG. 21 shows the reaction of the magnetic beads in the reaction tube in position 1, 2 and 3 in the shaker according to FIGs. 11, 12 and 13.

### DETAILED DESCRIPTION OF THE INVENTION

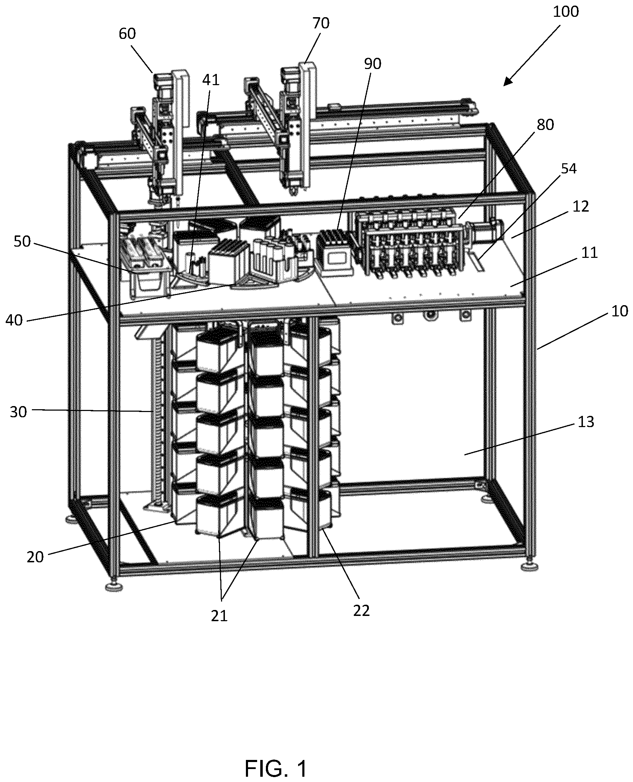

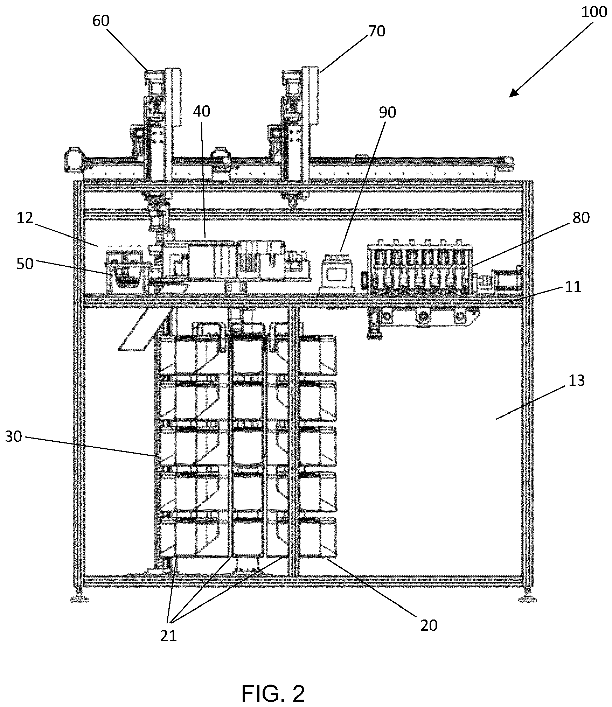

Referring to FIGs. 1 to 5 an automatic sample extraction system 100 is described, which can be used to prepare samples for numerous analytic processing systems and techniques. The system 100 comprises of plurality of units, which are controlled by a computer to achieve automatic sample extraction. The system 100 can process samples in a serial pattern in which a series of samples follow one another to be processed in a time sequence.

The system 100 comprises of a frame 10 having a horizontal platform 11, which divides the frame to a top section 12 and a bottom section 13. The frame 10 is preferably constructed of a relatively stiff, strong and sterilizable material that may be assembled to provide structural support to the various units of the system 100 and to be able to operate the system 100. The frame 10 may, for example, be constructed of a stainless steel that is biocompatible and sterilizable for use with the system 100. The system 100 comprises of a plurality of units positioned in the housing of the frame and supported by the frame 10 and moveable in a manner to operate a fully automated sample extraction system.

**The Storage Unit:** The system comprises of a storage unit that compromises of a rotary storage 20 installed on the bottom section 13 close to the left side of the frame 10. The rotary storage 20 includes a number of moveable trays, preferably eight trays 21, which are assembled in vertical position and each tray 21 comprises of a number of housings, preferable five housing to receive five boxes 22 of consumables. The operator of the machine can remove the trays 21 and load with boxes 22. The boxes 22 include samples and additional elements for the extraction process. The rotary storage 20 stores a large number of boxes, probably a total of forty boxes, of consumables for extraction process and is rotatable about a Z axis. The rotary storage area 20 is preferably configured to include multiple storage of consumables comprising reaction tube boxes, buffer boxes, elution tube boxes and various pipette tip boxes that are stored on the rotary storage 20 and transported by the box lift robot 30 for replacement. The rotary storage 20 can hold a large number of consumables for easy access. For example, 16 reaction tube boxes, 2 buffer boxes, 2 elution tube boxes, 12 (1ml) pipette tip boxes, 4(175 µL) pipette tip boxes and 4 (25 µL) pipette tip boxes.

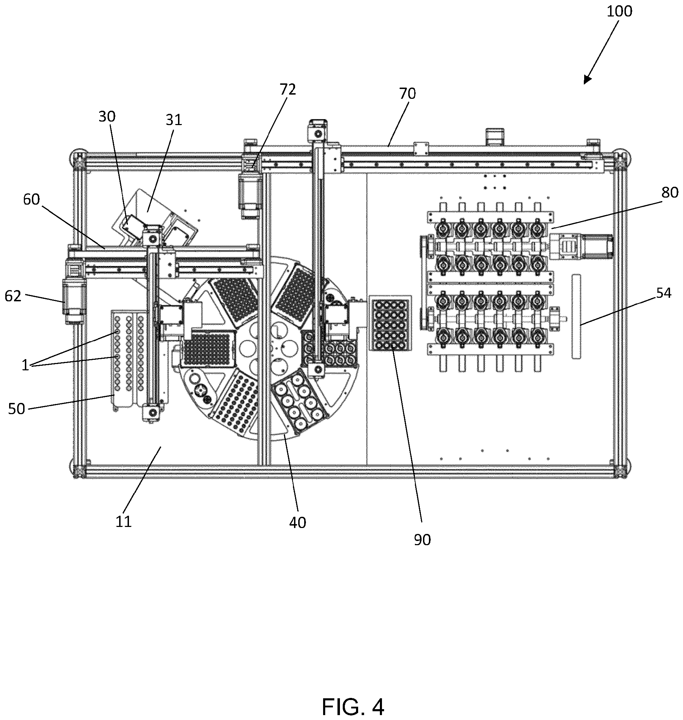

As shown clearly in FIG. 4 the storage unit also has a sample rack 50 mounted on the top section 12 on the left side of the frame comprising a plate with rails, where the sample tubes 1 are positioned in the system. Sample tubes 1 are manually or automatically loaded on sample rack 50 by a machine or an operator.

The storage unit further has a cooler 90 to store consumables that need to be stored in cold temperatures, such as 4°C environment. For example, magnetic beads solution is placed in cooler for storage and later transfer to the reaction tube 201. The cooler 90 can be any type of accessible cooler, preferably a Thermo-Electric Cooler. The function of the cooler 90 is to keep solutions between 4-8°C so that they can be functional.

The box lift robot 30 carries boxes 22 from the rotary storage 20 to a rotary table 40 on the top section 12 of the frame. The box lift robot 30 is a vertical motion robot mounted on a railing on the bottom section 13 to allow for a two axis (X and Z) linear movement of the box lift 30. The box lift robot 30 extends through an opening 31 to the top section 12 and can move to a desired position where a consumable box 22 is to be grabbed and lifted from the rotary storage 20 to the rotary table 40 on the top section 12.

**The sample preparation unit** comprises of a rotary table 40. The rotary table 40 of the sample preparation unit comprises of a number of housings, preferably six, sized to receive the consumable boxes 22 for extraction process. The rotary table 40 is rotatably mounted on the horizontal platform 11 on top section 12 of the frame. It can rotate about an axis and stops in a predetermined position in front of the box lift 30 to receive the consumable boxes 22. Each of the housings of the rotary table 40 may comprise of various boxes of pipette tips, comprising: Long pipette tips 42, medium pipette tips 43 and short pipette tips 44. Other consumable boxes, such as Nucleic acid tubes 45, various buffers 46 and reaction tubes 201 are further positioned on the rotary table 40 for the extraction process. A transferring unit 41 is provided on the rotary table 40 that comprises of a sample tube rack 2, a reaction tube rack 3 and a waste hole 4. In this unit 41, samples can be transferred from a sample tube 1 to a reaction tube 201 which is located right next to it to reduce the cross-contamination risk.

To operate a fully automated sample extraction, the system 100 provides a sample robot 60 and a reaction robot 70 to transfer the consumables for extracting process. The robots 60 and 70 are Cartesian coordinate robots that can move along the Z axis. The robots 60 and 70 are equipped with electric gripper and electric pipette assembly. The robots 60 and 70 are equipped with an electric gripper and an electric pipette assembly to pick the consumables, place the consumables in various locations, transfer liquids based on sample extraction application of the system and dispose the waste materials. The grippers are used to transfer the tubes. The pipette assemblies are utilized to move samples during the sample extraction process, as would be understood by one having ordinary skill in the art. The functioning of the grippers and pipettes are controlled by a computer program controller during operation of the sample extraction system 100.

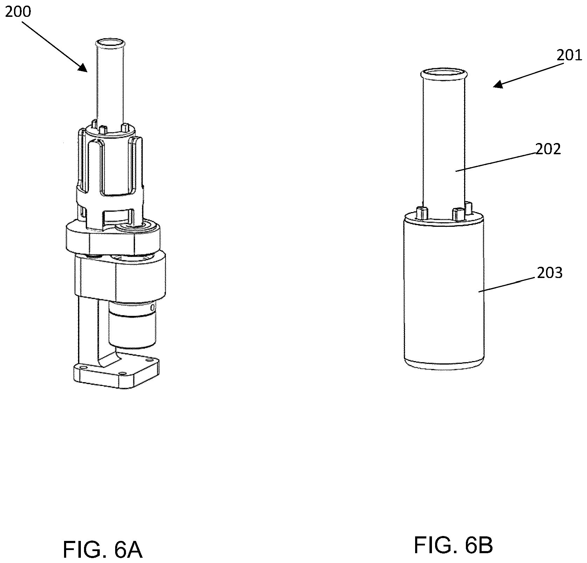

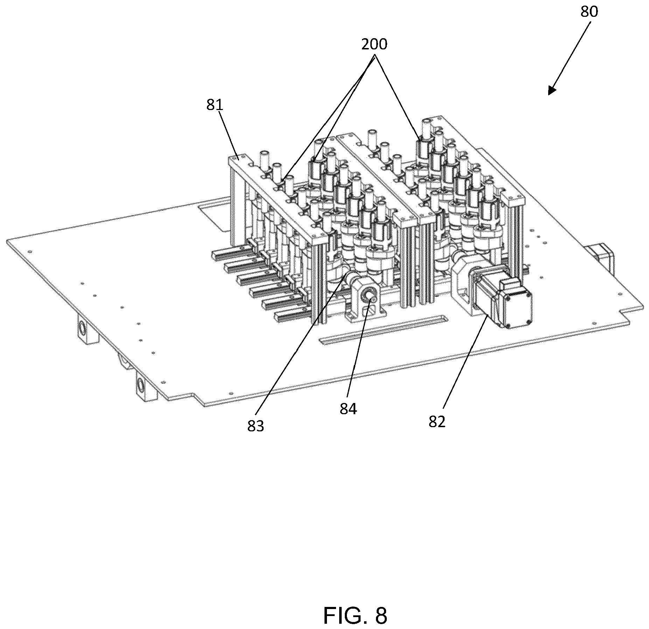

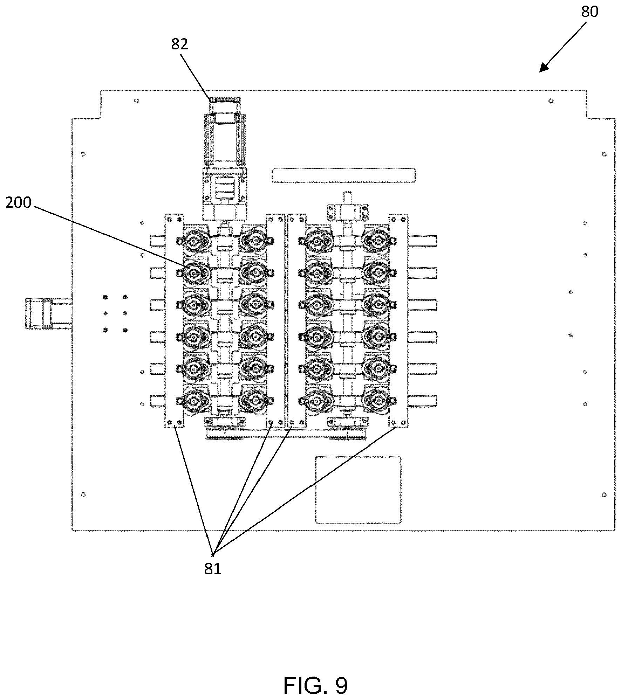

**The sample extraction unit:** Referring to FIGs. 1 and 6A to 13 the system further comprises of a sample extraction unit 80, which is mounted on the top section 12 and on the right side of the frame 10. It comprises of a number of (preferably thirty two) independent shakers 200. The samples with extraction components, such as magnetic beads and buffers to break cells and wash out the impurities, are flowed into the reaction tubes 201. The reaction tubes 201 are then placed in the shakers 200 for extraction process.

One embodiment of the present system 100 comprises of shakers 200 that are installed on four pieces of magnet racks 81 parallel to each other, wherein each magnet rack 81 receives six shakers 200. The magnet racks 81 are moveable about an X and Y axis and are provided with a set of magnet gears 83 to control the movement of the shakers 200. The magnet gears 83 are installed on the rotating shafts 84, wherein each shaft 84 preferable has six magnet gears 83 installed thereon. The rotating shafts 84 preferably operate at 1200rpm.

Each shaker 200 is configured to operate independently and provide a shaking motor to integrate an orbital shaking, heating, magnetic bead separation and liquid waste drainage. Each magnet rack 81, has a number of housings, each housing configured to receive a shaker 200. Each housing has a pair of L shaped magnet 95 having a vertical leg and a horizontal leg. The shakers 200 can be located at different distances form the magnetic racks 81.

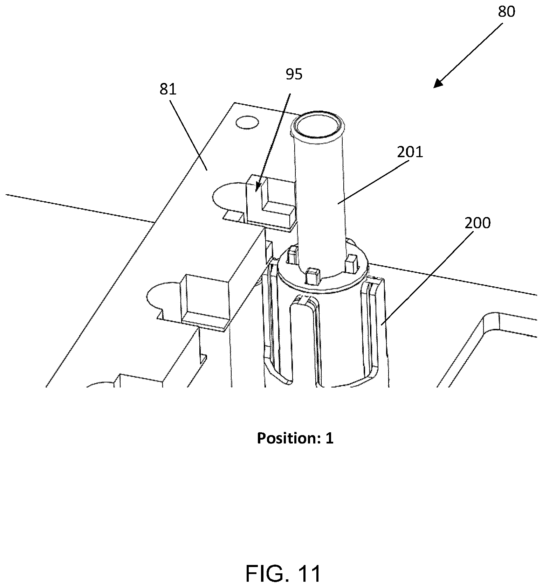

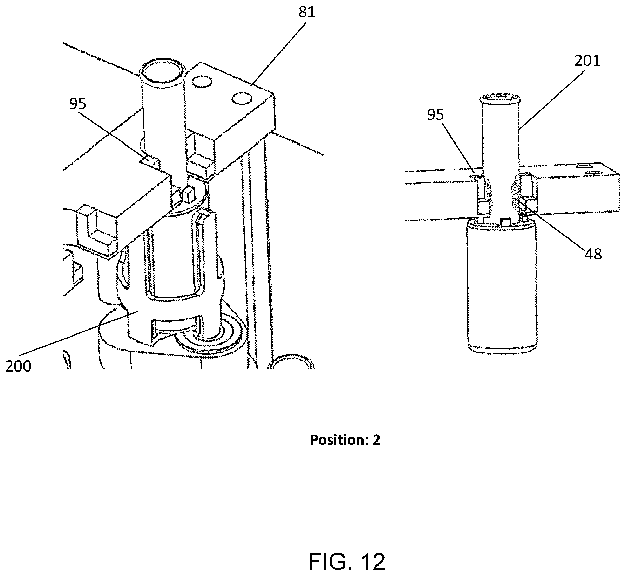

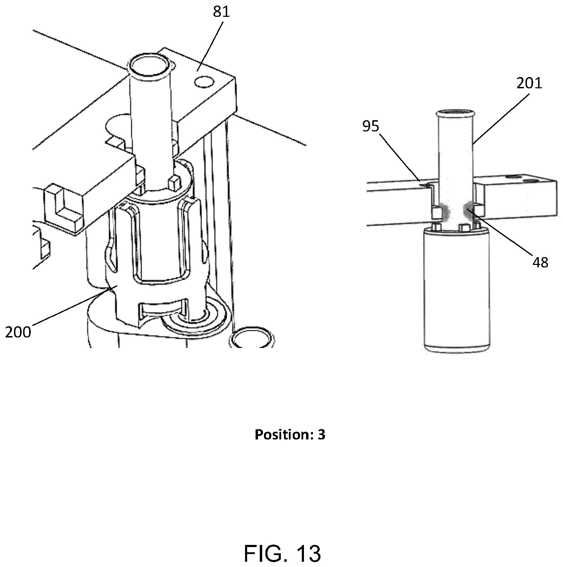

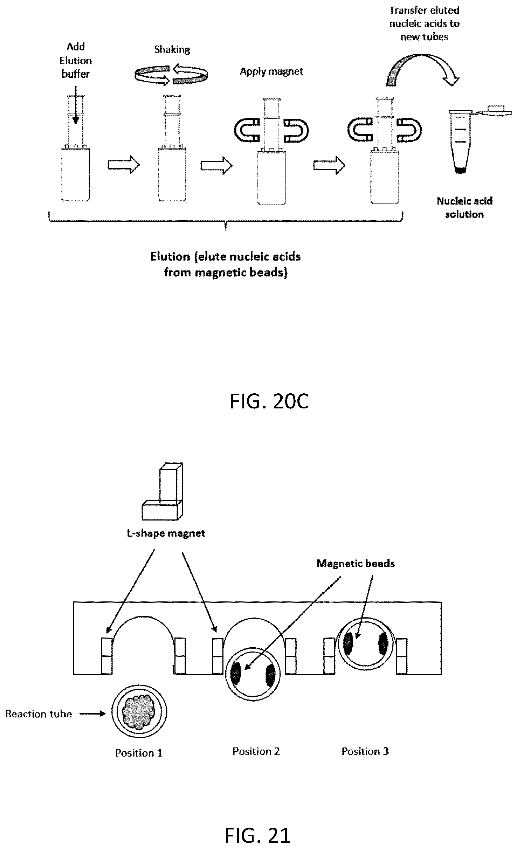

FIGs. 11-13 show three different positions: As shown in FIG. 11, when the shaker 200 is in position 1, the L shaped magnet 95 cannot attract magnetic beads inside the reaction tube 201 and, therefore, the magnet beads do not cluster together. When a shaker 200 with a reaction tube 201 therein is placed in a position 2 as shown in FIG.12, the L shaped magnet 95 can attract magnetic beads 48 inside the reaction tube 201 and therefore causes magnetic beads 48 clump together closer to the vertical walls of the L shaped magnet 95 at a lower position along the inner wall of the tube 201. When a shaker 200 with a reaction tube 201 therein is placed in a position 3 as shown in FIG. 13 the L shaped magnet 95 can attract magnetic beads 48 inside the reaction tube 201 and therefore cause magnetic beads 48 clump together but spread wider along the inner wall of the tube 201 compared to reaction tube in position 2 allowing for easy removal of the sample by a pipette. FIG. 21 further shows the L shaped magnet 95 and the reaction of the magnetic beads 48 in the reaction tube 201 inside the shaker 200 in various positions.

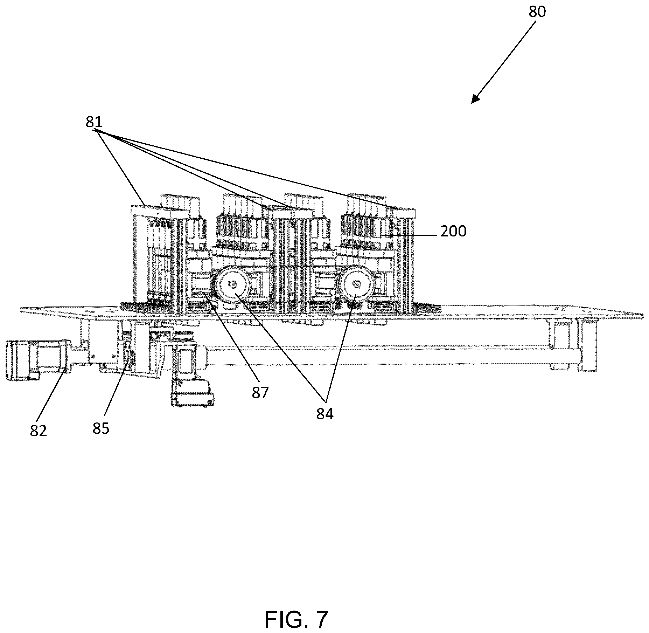

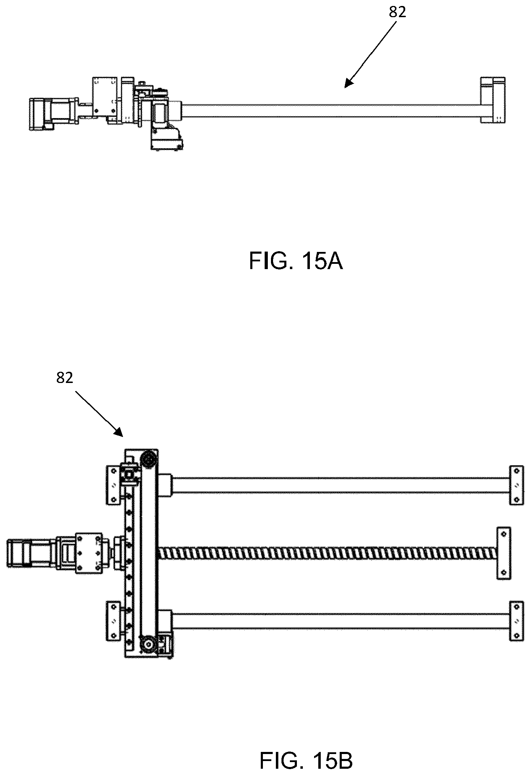

A Shaker Pusher robot pushes the shakers to different positions. As shown in FIGs. 7, 15A and 15B a two axis (X and Y) linear motion "Shaker Pusher" robot 82 is further provided in the sample extraction unit 80. The shaker pusher 82 is used to push shakers 200 to different positions. A push pad 85 pushes the shakers close or away of the rotating shaft 84. The shakers 200 will start shaking when approaching to a distance of about 1 mm to the rotating shaft 84. A sheet metal 87 is further installed on the bottom of the shakers to guide the shakers 200 close or away of the rotating shaft 84.

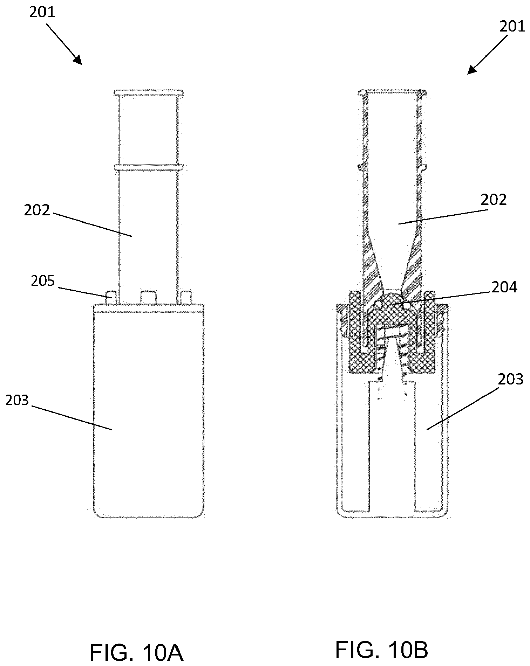

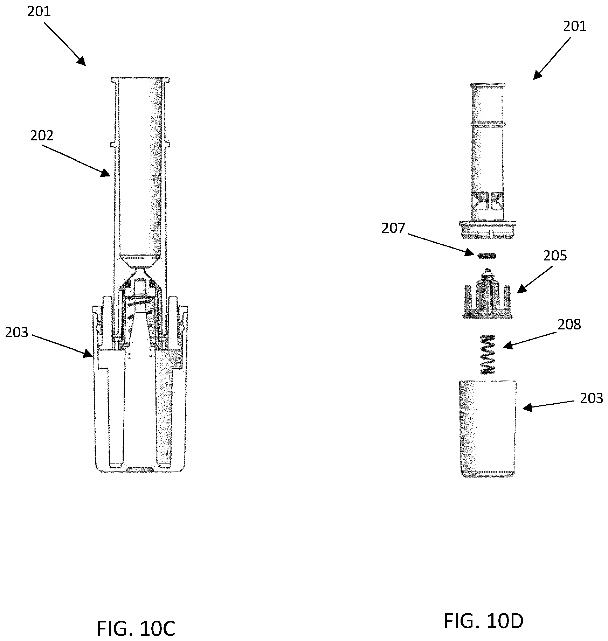

**Reaction Tubes:** Each reaction tube 201 comprises of two chambers. According to FIGs. 10A to 10D the top chamber is the reaction chamber 202, which is a cylindrical compartment to receive sample, buffer and magnetic beads for extraction process. The lower compartment is the waste chamber 203, which is a cylindrical container with a larger diameter than the reaction area 202 to receive liquid waste produced during the extraction process. The reaction area 202 and the waste tank 203 are connected to each other such that the reaction area 202 is separately formed and attached to the waste chamber 203. The reaction tube 201 provides a control valve 204 between the reaction area 202 and the waste chamber 203 which is in communication with the waste fluid disposal. The waste liquid generated during the extraction process is disposed inside the waste tank 203 when the valve 204 is opened. The valve 204 seals the opening between the reaction chamber 202 and the waste chamber 203 during the extraction process. The opening and closing of the valve 204 is controlled by pushing a series of push buttons 208 installed on the reaction tube 201 which depress a spring element 208. The force action on these push buttons opens the valve each time the waste liquid has to be disposed.

The opening and closing of the valve 204 is by the force acting on the push buttons 205 through the reaction robot 70. After the whole extraction process is completed, the reaction robot 70 carries the reaction tube 201 with the waste liquid retained in the waste chamber 203 and disposes it into the waste bin. This action prevents the reaction sample from flowing into the waste chamber 203. The reaction tube 201 may be constructed from a biocompatible, sterilisable material.

The gripper of the reaction robot 70 having a rod gripper (not shown) moveable in a vertical position to be inserted into the reaction area 202 to grip and transfer the reaction tube 201. The reaction robot 70 further has a sleeve (not shown) that slides over the rod gripper. The sleeve pushes on the push buttons 205 of the reaction tube 201 to open the valve 204.

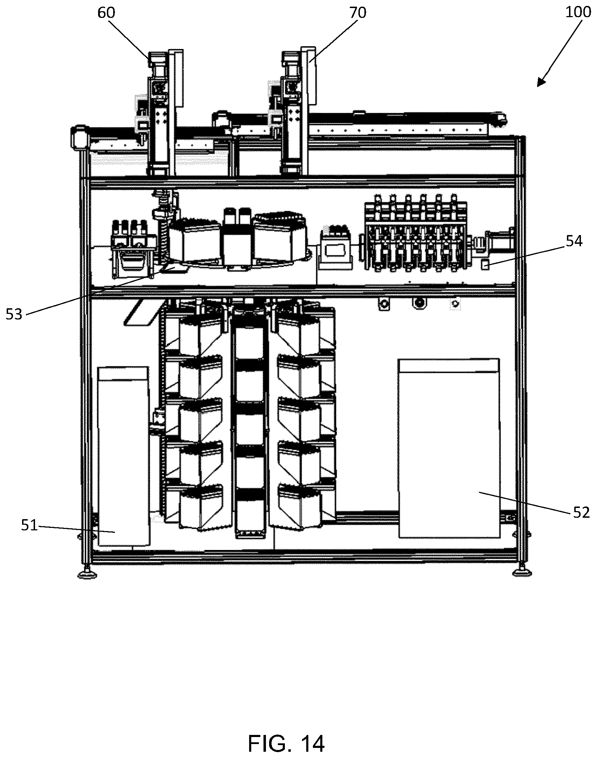

**Waste Unit:** According to FIG. 14 the system provides two waste bins 51 and 52 on the bottom chamber 13. During a liquid transfer, both sample robot 60 and reaction robot 70 transfer all wastes, except for the waste liquids such as used pipette tips into the first waste bin 51 or second waste bin 52. The waste liquid is disposed inside the waste tank 203 of the reaction tube 201 when the valve 203 is open. After the whole extraction processing is completed, the reaction robot 70 carries the reaction tube 201 with the waste liquid retained in the waste tank 203 and the waste liquid is disposed into the second waste bin 52. The disposal of the waste is through a set of openings provided on the horizontal platform 11 of the frame. The first opening 53 is mounted above the first waste bin 51 and the second opening 54 is mounted above the second waste bin 52.

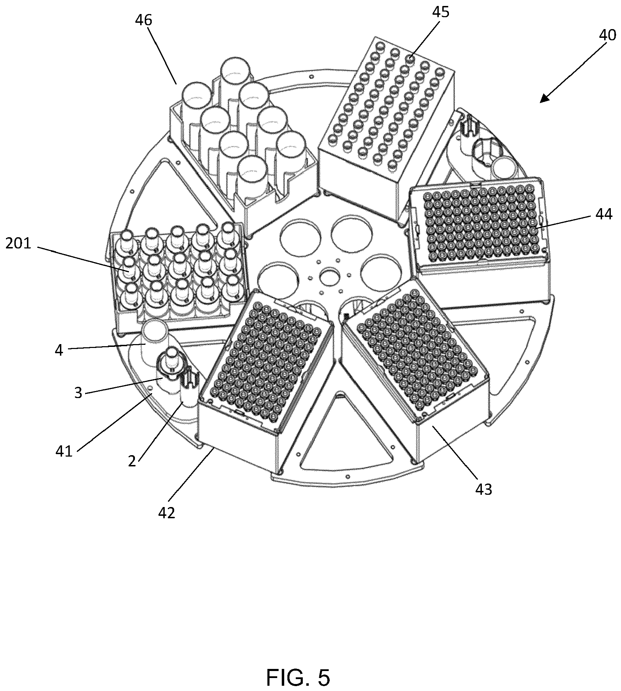

Referring to FIG. 5 again the transferring unit 41 comprises of a sample tube rack 2 to place a sample tube 1, a reaction tube rack 3 to place a reaction tube 201 and a waste hole 4. The sample robot 60 starts to continue the sample processing and picks a reaction tube 201 from the reaction tube box on the rotary table 40 and places it on the reaction tube rack 3. The sample robot 60 further picks a sample tube 1 from the sample rack 50 and places it on the sample tube rack 2. Then, sample robot 60 picks a pipette tip from the various pipette tip racks being a long pipette tip 42, medium pipette tip 43 or short pipette tip depending on the extraction process to transfer some sample from sample tube 1 into reaction tube 201.

Each used pipette tip and tube are disposed after use into the first waste bin 51 through a waste hole 4. The waste hole 4 is next to the transferring unit 41 so the cross-contamination risk which can happen during the movement of the samples and when the caps are removed, the possibility of spillage, droplet formation and/or aerosols is significantly reduced. This design of the system not only reduces cross contamination but also reduces traveling time of the pipette and liquid transfer.

The system 100 further comprises a computer program to command and control the operation of the units of the system. A non-transitory computer readable memory comprising of one or more data structures that alone or together contain stored information pertaining to a plurality of operation of the system comprising the types of operations that the system may run. The controller of the system is coupled with a sample extraction application to store information pertaining to a plurality of sample extracting types. The system 100 further includes sample extraction control application. At least one control application comprises sample extraction instructions to cause the sample extraction units to move and cause the sample extraction system 100 to prepare an extract sample using one or more selected consumables corresponding to a selected sample.

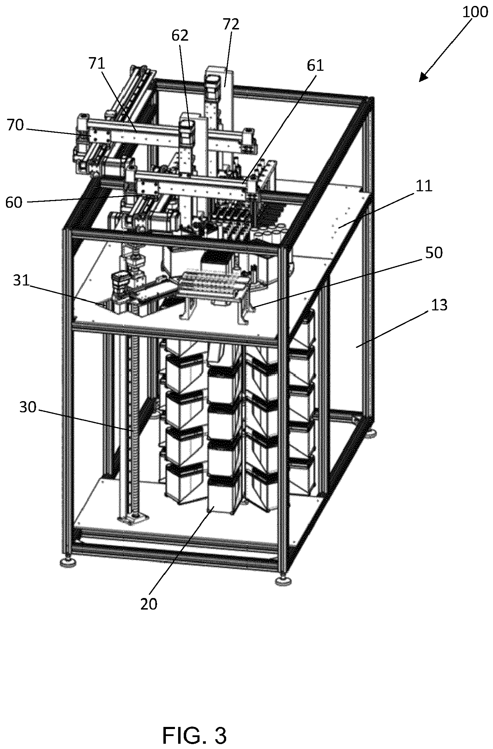

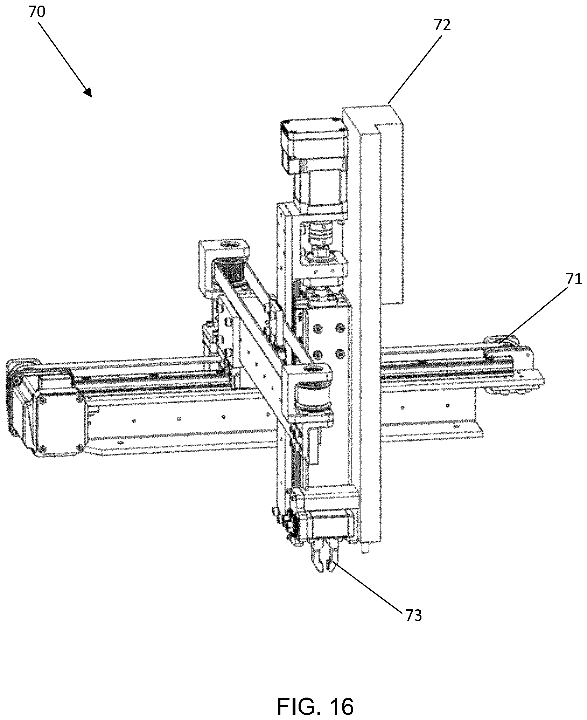

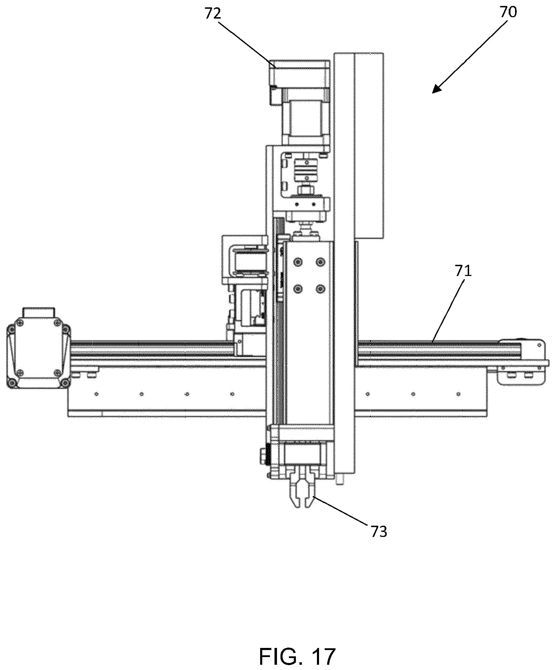

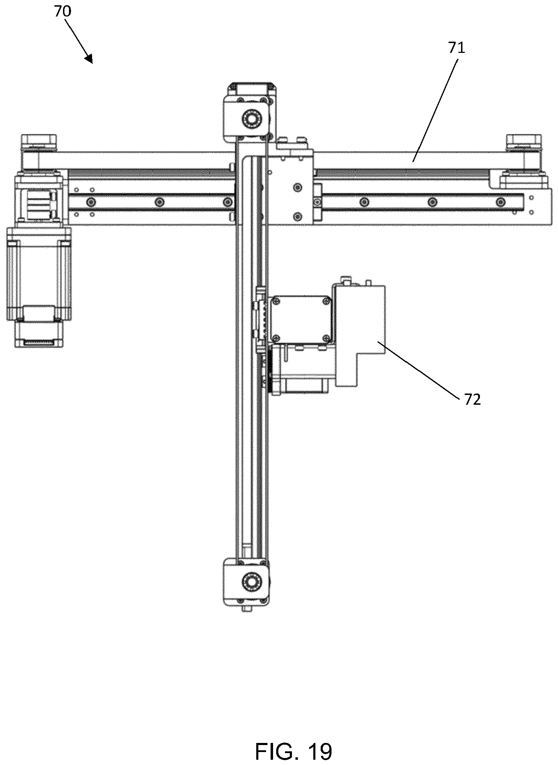

FIGs. 3 and 16 to 19 disclose the robot system of the present invention. The robots 60 and 70 have same mechanism to provide an automatic and succession sample extraction procedure. Both the sample robot 60 and the reaction robot 70 provide a gripper mounted on a moveable arm. The sample robot 60 is mounted movably to a robot rail 61 that is secured to the vertical support of the frame 10 for movement relative to the frame 10 in the storage unit and sample preparation unit. The sample robot 60 provides a gripper on a grip arm 62 extending moveable downwardly to releasable grasp various pipette tips and tubes and move between the areas.

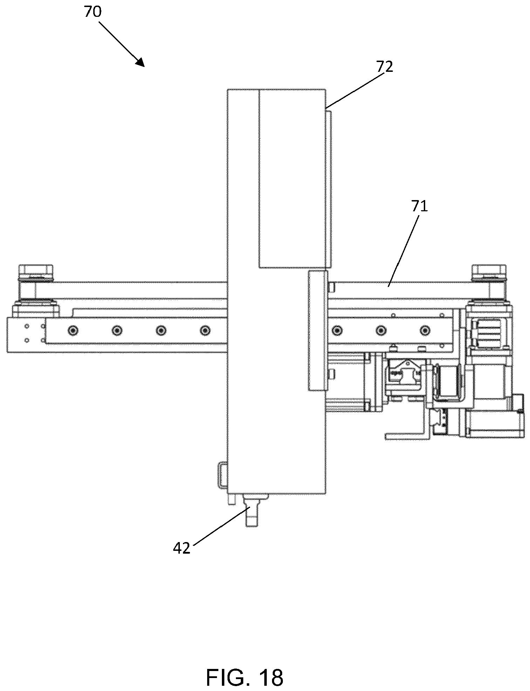

The reaction robot 70 is movably mounted on a robot rail 71 that is secured to the vertical support of the frame 10 for movement in between the sample preparation unit and sample extraction unit 80 to continue the automated sample processing system. The reaction robot 70 has a gripper 73 mounted on a grip arm 72 extending downwardly that is movable to releasable grasp various pipette tips and move between the areas and place them in pre-programmed position. The reaction robot 70 selects a pipette tip for example a long pipette tip 42 as shown in FIG. 18 from the various pipette tip boxes to add various components into the extraction tube 201.

According to FIGs. 1, 5 and 20A to 21 the process of the sample extraction in a reaction tube 201 of the system is disclosed. In operation, the rotary storage 20 rotates to a position where the box lift robot 30 can grab a required consumable. Meanwhile, the rotary table 40 rotates to a position where the box lifts 30 can place the consumable on a housing of the rotary table 40. Then, the box lifts 30 picks a consumable and lifts it up, and places the consumable on the rotary table 40. In such manner, the box lifts 30 can pick and place six boxes of different consumables on rotary table 40.

The sample robot 60 picks a reaction tube 201 from the reaction tube box and places it on the reaction tube rack 3. The sample robot 60 further picks a sample tube 1 from the sample rack 50 and places it on the sample tube rack 2 next to the reaction tube 201. Then, the sample robot 60 picks a pipette tip to transfer some sample (Nucleic acid) from sample tube 1 into reaction tube 201. The rotary table 40 rotates to move the filled reaction tube 201 to the right side of the frame next to the extraction unit 80. So, cross contamination risk which can happen during the movement of the samples, the possibility of spillage, droplet formation and/or aerosols is significantly reduced.

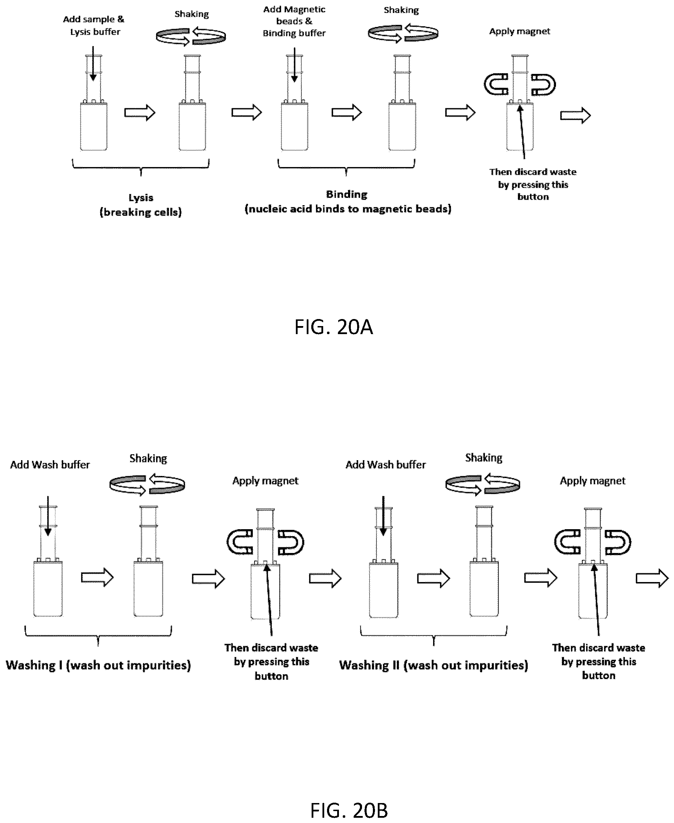

FIGs.20A to 20C show a detail procedure of extracting a sample (Nucleic acid). The reaction robot 70 picks a pipette tip and adds Lysis Buffer into the reaction tube 201 for breaking nucleic acid cells and transfer them to the sample extraction unit 80 and places each reaction tube 201 on a shaker 200 for the extraction process. The shakers 200 shake the reaction tube 201 for 10 min.

After 10 minutes shaking, the shaker pusher 82 pushes the shaker 200 away from the rotating shaft to stop shaker 200. Then the Reaction robot 70 moves to the rotary table 40 to pick and add some magnetic beads 48 and binding buffer to the reaction tube 201. The buffer improves the attachment and separation efficiency of the magnetic beads 48 contained in the sample in combination of motion of the shakers 200. In this stage the sample (nucleic acid) binds to the magnetic beads 48. Then, shaker pusher 82 will push shaker 200 to shake for 5 mins on L shaped magnet rack 95. The most useful characteristic of the magnetic beads 48 and buffers are, that they can reversibly bind nucleic acid and, when in the presence of a strong magnet, can be safely immobilized throughout multiple wash and manipulation steps. On each stage the reaction robot 70 dispose the used pipette tip into the waste bin.

The process of extracting the sample is being achieved in plurality stages by pushing the reaction tube 201 on magnet rack, shaking the shaker 200 to separate the magnetic beads 48 and washing the impurities from the sample. The Shaker pusher 82 pushes the reaction tube 201 on the magnetic rack 81 to apply magnet and separate the magnetic beads 48 from sample. Magnetic beads will stick to the walls of the reaction area 202.

In this stage the valve 204 between the reaction area 202 and the waste tank 203 of the reaction tube 201 is being opened by force of the reaction robot on the push buttons 205 and the waste produced during the extraction process is discarded from the reaction area 202 to the waste tank 203 of the reaction tube 201. Then the reaction robot 70 adds some wash buffer (FIG. 20B) into the sample. Shaker pusher 82 pushes the shaker 200 to shake for 1 min. Shaker pusher 82 pushes the reaction tube 201 on the magnetic rack 81 to apply magnet to separate the magnetic beads 48. Then the waste produced during the extraction process is discarded from the extraction area 202 to the waste tank 203 of the reaction tube 201.These steps may be repeated several times by adding additional buffers into the reaction tube, magnetizing, spinning and expelling the waste liquid as desired by the system.

According to FIG. 20C at the last stage of the extraction process to elute nucleic acids from magnetic beads 48, the magnetic beads have to be dissolved with small volume of elution buffer. elution buffer is added to the sample and the shaker pusher 82 pushes the shakers 200 to shake for 30 seconds. Shaker pusher 82 pushes the shaker 200 on magnetic rack to apply magnet and the waste produced is discarded. Cross contamination can also occur during introduction and removal of a pipette from the system due to the movement of the contaminated pipettes above open sample containers. Such contamination will quickly lead to false results or erroneous and incorrect test results. Care must be taken to prevent such contamination.

The Nucleic acid solution containing purified viral RNA/DNA is being transferred to an elution tube. The design of the reaction tube 201 allows the magnetic beads to clump together closer to the bottom of the tube so that the elution buffer can contact the beads effectively and completely. Then the reaction robot 70 carries the reaction tube 201 to the waste hole 4 and drains the waste out.

When magnetic beads 48 are presented into a reaction tube 201 in the shakers 200, The substances in the sample attach to the magnetic beads by collision of magnetic beads 48 with biological materials. Magnetic beads 48 are added to the reaction tube 201 to allow for example DNA molecules to bind to the beads 48. The reaction tube 201 is then placed on the shaker 200. The shaker 200 helps sample mixing to obtain a homogenous mixture of the magnetic beads 48 with the sample in order to enhance the yield of DNA bound to the magnetic beads 48. The magnetic beads 48 used in the process may be at least one of a stainless-steel bead, a zirconia bead, a ceramic bead, or a glass bead.

Systems and methods according to embodiments of the invention can be used to prepare different biological samples for various analytical procedures. Examples of such biological samples include, but are not limited to, blood, serum, plasma, urine, saliva, feces, organ tissues, etc., preferably a biological specimen from a patient. Depending on the heed, the processed sample can contain one or more isolated or enriched biological molecules that can be analyzed, detected or quantified in subsequent procedures. For example, a biological sample (such as a biological specimen from a subject) can be processed in a system of the invention to obtain a processed sample containing isolated or enriched nucleic acids, and the processed sample can be used for amplifying, detecting or quantifying one or more nucleic acids of interest, e.g., as the template in a PCR reaction, or in a hybridization processing using one or more chemiluminescent-labeled nucleic acids.

In a preferred embodiment, a method further comprises detecting or quantifying a nucleic acid in the processed sample using a PCR or a chemiluminescent assay. In another example, a biological sample (such as a biological specimen from a subject) can be processed in a system of the invention to obtain a processed sample containing peptides or proteins, and the processed sample can be used in an immunoassay, such as a radio immunoassay, ELIS A, immunofluorescence assay, or chemiluminescence immunoassay, for detecting or quantifying one or more peptides or proteins of interest.

In another embodiment, the method comprises detecting or quantifying a peptide or polypeptide in the processed sample using an ELISA, an immunofluorescence assay, or a chemiluminescence immunoassay (CLIA), more preferably, a CLIA. The CLIA is a more sensitive alternative to ELISA, which involves the generation of electromagnetic radiation as light by the release of energy from a chemical reaction and the measurement of light intensity, e.g., using a photomultiplier or photodiode and the associated electronics to convert and record signals, Known methods and reagents for detecting or quantifying biological molecules, such as the PCR, ELISA, immunofluorescence, assay or CLIA. procedures; can be used in the invention in view of the present disclosure.

### Statements of Support

An automated biologic sample extracting system from a set of biological samples, is provided the extracting system comprising:
a) an upright frame divided by a horizontal platform into a top section and a bottom section, and the horizontal platform has a right side and a left side;
b) a rotary storage system installed on the bottom section to stores a plurality of stored boxes of a set of consumables, said rotary storage system is rotatable about a vertical axis;
c) a set of reaction tubes, as a member of the set of consumables, to prepare and extract samples;
d) a rotary table, installed on the top section and above the rotary storage system, and having
   i) a sample tube rack to receive a sample tube,
   ii) a reaction tube rack, located at a first position next to the sample tube rack to minimize the sample movement, and to receive a reaction tube,
   iii) a waste hole to dispose a waste substance, and
   iv) a plurality of housings sized to receive and hold a plurality of boxes of the set of consumables;
e) a box lift robot having a vertical motion to transfer each stored box from the rotary storage system onto the rotary table, whereby, the rotary storage system rotates to alight each stored box for pickup by the box lift robot and the rotary table rotates to alight the rotary table to receive each stored box from the box lift robot;
f) a sample robot to transfer a sample tube from a sample tube rack onto a transferring unit on the rotary table, and to transfer a reaction tube to the transferring unit next to the sample tube, to mix a sample and consumable inside the reaction tube with minimal sample movement and reduced risk of contamination;
g) a sample extraction unit, installed on the top section, having independent shakers and a number of magnet racks, wherein each shaker is adapted to receive each reaction tube and each shaker can function individually by a shaking mechanism;
h) a reaction robot to transfer a reaction tube from the rotary table to the sample extraction unit, after the rotary table is rotated to move the reaction tube from the first position to a second position, wherein the second position is the closest distance between the reaction tube and the sample extraction unit to minimize sample movement and reduce risk of contamination, the reaction robot further transfers the set of consumables;
   whereby the extracting system has a small footprint with minimal movement of the set of consumables, thereby reducing potential contamination during the extraction process.

The system, wherein the rotary table is placed on the left side of the horizontal platform and the sample extraction unit is placed on a right side of the rotary table, and wherein the reaction tube rack is initially set on a left side of the rotary table, and it is rotated to the right side of the rotary table to be placed close to the sample extraction unit, after sample preparation process is completed.

The system, further having a cooler, installed on the top section, to store a plurality of consumables that need to be stored at a low temperature environment.

The system, further having a waste unit installed on the bottom section, separating the sample extraction unit and the waste unit by the horizontal platform to prevent contamination.

The system, further having a programmable control system programmed to synchronize and process samples in a serial pattern in which a series of samples follow one another to be processed in a time sequence and in succession so that it keeps a fixed processing turnaround time of each sample regardless of when a sample has started the process.

The system, wherein the reaction tube comprises a reaction chamber at a top part of the reaction tube to receive a sample and a buffer and/or a set of magnetic beads for extraction process; a waste chamber on the bottom part of the reaction tube to receive a waste substance produced from the extraction process, and a control valve connecting the reaction chamber to the waste chamber.

The system, wherein the set of consumables comprising: a set of samples, buffers, long, medium and short pipette tips, and a set of reaction tubes.

The system, wherein the sample extraction unit comprises of a number of independent shakers installed on a number of magnetic racks, wherein each shaker is adapted to receive the reaction tube and can function individually by a shaking mechanism.

The system, wherein each shaker has a shaking motor to integrate an orbital shaking.

The system, wherein the magnetic racks are moveable about an X and Y axis and have a set of magnet gears to control the movement of the shakers.

The system, wherein the magnetic gears are installed on a set of rotating shafts. The system, wherein each shaft preferably operate at 1200rpm.

The system, wherein each shaker comprises of a substantially cylindrical housing, each housing having a dimension slightly larger than the bottom part of the reaction tube.

The system, wherein each magnetic rack has an L shaped magnet to receive each reaction tube inside a shaker at a set of predefined distances with respect to the L shaped magnet, thereby changing the magnetic intensity acting on each reaction tube.

The system, wherein the sample extraction unit has a linear motion shaker pusher robot to push the shakers to a predetermined position, wherein the reaction tube can be located at a first distance from the L shaped magnet where the effect of magnets on the magnetic beads is small, a second distance from the L shaped magnets, where the effect of the magnets on the magnetic beads is medium, and a third distance from the L shaped magnets where the effect of the magnets on the magnetic beads is large.

The system, wherein said number of magnet racks are installed parallel to each other and moveable about the horizontal plane.

The system, wherein each magnetic rack receives six shakers.

The system, wherein the number of independent shakers is 24.

The system, wherein the number of independent shakers is 32.

The system, wherein the sample robot and the reaction robot are equipped with an electric gripper to pick and transfer the sample tubes.

The system, wherein the sample robot and the reaction robot have an electric pipette for transferring consumables.

The system, wherein the gripper of the reaction robot has a rod gripper moveable in a vertical position to be inserted into the reaction tube to grip and transfer the reaction tubes.

The system, wherein the reaction robot has a sleeve that slides over the rod gripper to open the valve of the reaction tube.

The system, wherein a first electric gripper of the sample robot is mounted on a first grip arm moveable on a first robot rail that is secured to the upright frame for movement relative to the rotary storage system and the rotary table.

The system, wherein a second gripper is mounted on a second grip arm moveable on a second robot rail that is secured to the upright frame for movement relative to the rotary table and the sample extraction unit, said second gripper automatically selects and grasps a pipette tip from various pipette tip boxes to add various components into the extraction tube.

An automated biologic sample extracting system from a set of biological samples is provided, the extracting system comprising:
a) a set of reaction tubes, wherein each reaction tube comprises a reaction chamber at a top part to receive a sample, a buffer and magnetic beads for extraction process and a waste chamber on the bottom part to receive a waste substance produced from the extraction process and a control valve connecting the reaction chamber to the waste chamber;
b) a storage unit comprising:
   i) a rotary storage system to store a plurality of stored boxes of a set of consumables;
   ii) a sample platform comprising a plurality of sample tubes;
   iii) a cooler to store a plurality of consumables that need to be stored at low temperature;
c) a sample preparation unit comprising:
   i) a rotary table that has a transferring unit comprising of a sample tube rack to receive a sample tube, a reaction tube rack to receive a reaction tube and;
   ii) a plurality of housings sized to receive and hold a plurality of boxes of the set of consumables; wherein the rotary table holds the sample tubes and the reaction tubes right next to each other for each quick access for transferring the sample from the sample tubes to the reaction tubes;
d) a waste unit to dispose a waste substance;
e) a sample extraction unit;
f) a plurality of robots to move tubes, samples, and boxes comprising:
   i) a box lift robot that is a vertical motion robot to grab and carry the plurality of stored boxes of the set of consumables to the sample preparation unit;
   ii) a sample robot to transfer a sample tube from the sample platform to the transferring unit, transfer a reaction tube from the boxes of a set of consumables to the transferring unit next to the sample tube and transfer a sample into the reaction tube for mixing, generating a small footprint with minimal movement of the set of consumables and reducing potential contamination during the extraction process;
   iii) a reaction robot to transfer the set of consumables into the reaction tube, wherein by each rotating of the rotary table a consumable is picked by the reaction robot and added to the reaction tube and after mixing the rotary table rotates and the reaction robot transfers the reaction tube to the sample extraction unit;
g) a programmable control system programmed to process samples in a serial pattern in which a series of samples follow one another to be processed in a time sequence and in succession so that it keeps a fixed processing turnaround time of each sample regardless of when a sample would start the process.

A reaction tube for an automated biologic sample extracting system from a set of biological samples is provided, comprising:
a) a reaction chamber at a top part of the reaction tube to receive a sample, a buffer and magnetic beads for an extraction process, wherein the reaction chamber has a reaction chamber diameter and a bottom opening with an opening diameter;
b) a waste chamber at the bottom part of the reaction tube to receive a waste substance produced from the extraction process, wherein the waste chamber has a waste chamber diameter and a top opening;
c) a valve system placed between the reaction chamber and the waste chamber, wherein the waste substance produced during the extraction process is disposed into the waste chamber when the valve system is open, wherein the valve system has
   a central stem that seals the bottom opening of the reaction chamber when in closed position,
   a spring placed inside the valve system and configured to force the central stem onto the bottom opening to keep the valve system in the closed position,
   a set of push buttons placed on an outer periphery of the valve system that are connected to the central stem, and are exposed from an outer periphery of the reaction tube, wherein the central stem is pushed down when the set of push buttons are pushed down to open the valve system, and pushed back to the closed position by the spring, when the set of push buttons are not pushed.

A reaction tube, wherein a diameter of the waste chamber is larger than a diameter of the reaction chamber.

A reaction tube, wherein the control valve opens by depressing a set of push button on the outer part of the reaction chamber.

The reaction tube, wherein the reaction tube is constructed from a biocompatible and sterilizable material.

A method of extracting a biological sample is provided, comprising steps of:
a) configuration a sample preparation unit with minimal movement of sample and consumable material, wherein the sample preparation unit comprises of a rotary table to prepare a sample in a reaction tube by a sample robot;
b) configuring a sample extraction unit to extract a sample by adding extraction components to a sample in the reaction tube;
c) placing the rotary table on the left side of a horizontal platform and the sample extraction unit on a right side of the rotary table;
d) setting the reaction tube initially on a left side of the rotary table to prepare the sample;
e) rotating the rotating table to move the reaction tube to the right side of the rotary table to be placed close to the sample extraction unit, after sample preparation process is completed, and
f) completing a sample extraction process;
   whereby the sample preparation process is completed with minimal movement of the sample and consumables, and the reaction tube is moved with a minimal distance from the rotary table to the sample extraction unit, thereby minimizing the contamination risk.

The method, wherein the contamination risk is further minimized by placing a rotary storage unit below the rotary table, and picking and moving a required consumable box from the rotary storage unit to the rotary table with a vertical movement and without passing over any tube on the rotary table, and by rotating the rotary table to a position where the box lift can place the required consumable thereon.

The method, wherein the sample preparation process comprising steps of:
a) grabbing a sample tube by a sample robot and placing the sample tube on a sample rack.
b) grabbing a reaction tube by the sample robot and placing the reaction tube on a reaction tube rack, and
c) transferring a sample from the sample tube to the reaction tube and selectively adding a first buffer to the reaction tube.

The method, comprising steps of:
a) placing the reaction tube on a shaker on the sample extraction unit;
b) shaking the reaction tube for a predetermined time on a set of magnetic racks;
c) adding a plurality of magnetic beads and a binding buffer to the reaction tube and shaking the reaction tube for a predetermined period on the magnet racks;
d) adding a wash buffer to the reaction tube and shaking for a shaking time and pushing the reaction tube on the magnetic rack to separate magnetic beads by reaction robot and draining the impurities out;
e) adding elution buffer to the reaction tube and shaking for an elusion period to elute the sample from the magnetic beads, and
f) transferring the extracted solution from the reaction tube into an extracted sample tube and transferring the extracted sample tube back to sample platform by sample robot.

The method, wherein the sample preparation process is performed using a pipette tip selectively grasping by the sample robot and wherein the pipette assembly further comprises a vacuum system to withdraw a predetermined volume of sample from a sample tube.

The method, wherein sample extraction process is performed using a pipette tip selectively grasping by the reaction robot and wherein the pipette assembly further comprises a vacuum system to withdraw a predetermined volume of sample from a sample tube.

The method, wherein the sample is transferred from the sample tube to the reaction tube by a first pipette selected and grasped by the sample robot.

The method, wherein the buffer and magnetic bead are transferred to the reaction tube by a second and third pipette selected and grasped by the reaction robot. An automated biologic sample extracting system from a set of biological samples is provided, the extracting system comprising:
a) a set of reaction tubes, wherein each reaction tube comprises a reaction chamber at a top part to receive a sample, a buffer and magnetic beads for extraction process and a waste chamber on the bottom part to receive a waste substance produced from the extraction process and a control valve connecting the reaction chamber to the waste chamber;
b) a storage unit comprising:
   i) a rotary storage system to store a plurality of stored boxes of a set of consumables;
   ii) a sample platform comprising a plurality of sample tubes;
   iii) a cooler to store a plurality of consumables that need to be stored at low temperature;
c) a sample preparation unit comprising:
   i) a rotary table that has a transferring unit comprising of a sample tube rack to receive a sample tube, a reaction tube rack to receive a reaction tube and;
   ii) a plurality of housings sized to receive and hold a plurality of boxes of the set of consumables; wherein the rotary table holds the sample tubes and the reaction tubes right next to each other for each quick access for transferring the sample from the sample tubes to the reaction tubes;
d) a waste unit to dispose a waste substance;
e) a sample extraction unit;
f) a plurality of robots to move tubes, samples, and boxes comprising:
   i) a box lift robot that is a vertical motion robot to grab and carry the plurality of stored boxes of the set of consumables to the sample preparation unit;
   ii) a sample robot to transfer a sample tube from the sample platform to the transferring unit, transfer a reaction tube from the boxes of a set of consumables to the transferring unit next to the sample tube and transfer a sample into the reaction tube for mixing, generating a small footprint with minimal movement of the set of consumables and reducing potential contamination during the extraction process;
   iii) a reaction robot to transfer the set of consumables into the reaction tube, wherein by each rotating of the rotary table a consumable is picked by the reaction robot and added to the reaction tube and after mixing the rotary table rotates and the reaction robot transfers the reaction tube to the sample extraction unit;
g) a programmable control system programmed to process samples in a serial pattern in which a series of samples follow one another to be processed in a time sequence and in succession so that it keeps a fixed processing turnaround time of each sample regardless of when a sample would start the process.

An automated biologic sample extracting system from a set of biological samples is provided, the extracting system comprising:
a) a sample preparation unit having a rotary table to prepare a sample in a reaction tube by a sample robot;
b) a sample extraction unit to extract a sample by adding extraction components to a sample in a reaction tube;
c) a reaction robot to transfer the reaction tube from the rotary table after the table is rotated to place the reaction tube next to the sample extraction unit, thereby the extracting system has a small footprint with minimal movement of a set of consumables, thereby reducing potential contamination during the extraction process.

The system, wherein the set of consumables comprising: a set of samples, buffers, long, medium and short pipette tips, and a set of reaction tubes.

The system, wherein the transferring unit have a sample tube rack, a reaction tube rack next to the sample tube rack and a waste unit next to the reaction tube rack and the sample tube rack.

The system, wherein the sample is transferred from the sample tube to the reaction tube by a first pipette selected and grasped by the sample robot.

The system, wherein the buffer and magnetic bead are transferred to the reaction tube by a second and third pipette selected and grasped by the reaction robot.

The system, wherein the waste unit comprises of a set of bins connected through a set of opening.

The system, wherein the rotary storage is rotatable about a vertical axis.

The system, wherein the sample extraction unit comprises of a number of independent shakers installed on a number of magnet racks; each shaker has a shaking motor to integrate an orbital shaking.

The system, wherein the system comprising of an upright frame divided by a horizontal platform into a top section and a bottom section, and wherein the storage unit and the waste unit are installed on the bottom section and the sample preparation and the sample extraction units are installed on the top section.

The system, wherein the rotary storage system comprising of eight trays assembled in vertical position and wherein each tray comprising of five housing configured to receive five boxes in a total of forty boxes of the set of consumables.

An automated biologic sample extracting system from a set of biological samples is provided, the extracting system comprising:
a) a sample preparation unit having a rotary table to prepare a sample in a reaction tube by a sample robot; comprising a first gripper releasable grasp a sample tube and place in the sample tube rack and releasable grasp various pipette tips to transfer sample from sample tube into the reaction tube;
b) a sample extraction unit to extract a sample by adding extraction components to a sample in a reaction tube;
c) a reaction robot to transfer the reaction tube from the rotary table comprising a second gripper, said second gripper automatically selects and grasps a pipette tip from various pipette tip boxes to add various components into the extraction tube.

The system, wherein the sample robot and the reaction robot are equipped with an electric gripper to pick and transfer the sample tubes.

The system, wherein the sample robot and the reaction robot have an electric pipette for transferring consumables.

The system, wherein the gripper of the reaction robot has a rod gripper moveable in a vertical position to be inserted into the reaction tube to grip and transfer the reaction tubes.

The system, wherein the reaction robot has a sleeve that slides over the rod gripper whereby the force of the sleeve pushes the series of push buttons of the reaction tube to open the valve.

The system, wherein the first gripper is mounted on a first grip arm moveable on a first robot rail that is secured to the frame, for movement relative to the frame in the storage unit and sample preparation unit.

The system, wherein the second gripper is mounted on a second grip arm moveable on a second robot rail that is secured to the frame, for movement relative to the frame in between the sample preparation unit and sample extraction unit, said gripper automatically selects and grasps a pipette tip from various pipette tip boxes to add various components into the extraction tube.

The system, wherein the reaction robot further has a rod gripper with a sleeve member sliding over the rod gripper, said sleeve member pushes on the push buttons of the reaction tube thereby to open and close the valve to dispose the waste liquid produced during extraction process, thereby preventing the reaction sample from flowing into the waste chamber.

A method of extracting a biological sample is provided, comprising steps of:
a) rotating a rotary storage to a position where a box lift can pick a required consumable from a set of consumables and transporting the required consumable from the rotary storage to a rotary table and rotating the rotary table to a position where the box lift can place the required consumable thereon;
b) grabbing a sample tube by a sample robot and placing the sample tube on a sample rack;
c) grabbing a reaction tube by the sample robot and placing the reaction tube on a reaction tube rack;
d) transferring a sample from the sample tube to the reaction tube and selectively adding a first buffer to the reaction tube;
e) rotating the rotary table to move the reaction tube with the sample close to a sample extraction unit;
f) placing the reaction tube on a shaker on the sample extraction unit;
g) shaking the reaction tube for a predetermined time on a set of magnetic racks;
h) adding a plurality of magnetic beads and a binding buffer to the reaction tube and shaking the reaction tube for a predetermined period on the magnet racks;
i) adding a wash buffer to the reaction tube and shaking for a shaking time and pushing the reaction tube on the magnetic rack to separate magnetic beads by reaction robot and draining the impurities out;
j) adding elution buffer to the reaction tube and shaking for an elusion period to elute the sample from the magnetic beads, and
k) transferring the extracted solution from the reaction tube into an extracted sample tube and transferring the extracted sample tube back to sample platform by sample robot.

The method wherein step (d) is performed using a pipette tip selectively grasping by the sample robot and wherein the pipette assembly further comprises a vacuum system to withdraw a predetermined volume of sample from a sample tube.

The method, wherein steps (h) through (k) are performed using a pipette tip selectively grasping by the reaction robot and wherein the pipette assembly further comprises a vacuum system to withdraw a predetermined volume of sample from a sample tube.

## Claims

1. A reaction tube for an automated biologic sample extracting system from a set of biological samples, comprising:
d) a reaction chamber at a top part of the reaction tube to receive a sample, a buffer and magnetic beads for an extraction process, wherein the reaction chamber has a reaction chamber diameter and a bottom opening with an opening diameter;
e) a waste chamber at the bottom part of the reaction tube to receive a waste substance produced from the extraction process, wherein the waste chamber has a waste chamber diameter and a top opening;
f) a valve system placed between the reaction chamber and the waste chamber, wherein the waste substance produced during the extraction process is disposed into the waste chamber when the valve system is open, wherein the valve system has
a central stem that seals the bottom opening of the reaction chamber when in closed position,
a spring placed inside the valve system and configured to force the central stem onto the bottom opening to keep the valve system in the closed position, a set of push buttons placed on an outer periphery of the valve system that are connected to the central stem, and are exposed from an outer periphery of the reaction tube, wherein the central stem is pushed down when the set of push buttons are pushed down to open the valve system, and pushed back to the closed position by the spring, when the set of push buttons are not pushed.

2. The system of claim 1, wherein the reaction tube is constructed from a biocompatible and sterilizable material.

3. An automated biologic sample extracting system from a set of biological samples, the extracting system comprising:
d) a set of reaction tubes, wherein each reaction tube comprises a reaction chamber at a top part to receive a sample, a buffer and magnetic beads for extraction process and a waste chamber on the bottom part to receive a waste substance produced from the extraction process and a control valve connecting the reaction chamber to the waste chamber;
e) a storage unit comprising:
iv)a rotary storage system to store a plurality of stored boxes of a set of consumables;
v) a sample platform comprising a plurality of sample tubes;
vi)a cooler to store a plurality of consumables that need to be stored at low temperature;
f) a sample preparation unit comprising:
iii) a rotary table that has a transferring unit comprising of a sample tube rack to receive a sample tube, a reaction tube rack to receive a reaction tube and;
iv)a plurality of housings sized to receive and hold a plurality of boxes of the set of consumables; wherein the rotary table holds the sample tubes and the reaction tubes right next to each other for each quick access for transferring the sample from the sample tubes to the reaction tubes;
d) a waste unit to dispose a waste substance;
e) a sample extraction unit;
f) a plurality of robots to move tubes, samples, and boxes comprising:
iv)a box lift robot that is a vertical motion robot to grab and carry the plurality of stored boxes of the set of consumables to the sample preparation unit;
v) a sample robot to transfer a sample tube from the sample platform to the transferring unit, transfer a reaction tube from the boxes of a set of consumables to the transferring unit next to the sample tube and transfer a sample into the reaction tube for mixing, generating a small footprint with minimal movement of the set of consumables and reducing potential contamination during the extraction process;
vi)a reaction robot to transfer the set of consumables into the reaction tube, wherein by each rotating of the rotary table a consumable is picked by the reaction robot and added to the reaction tube and after mixing the rotary table rotates and the reaction robot transfers the reaction tube to the sample extraction unit;
g) a programmable control system programmed to process samples in a serial pattern in which a series of samples follow one another to be processed in a time sequence and in succession so that it keeps a fixed processing turnaround time of each sample regardless of when a sample would start the process.

4. An automated biologic sample extracting system from a set of biological samples, the extracting system comprising:
a) a sample preparation unit having a rotary table to prepare a sample in a reaction tube by a sample robot;
b) a sample extraction unit to extract a sample by adding extraction components to a sample in a reaction tube;
c) a reaction robot to transfer the reaction tube from the rotary table after the table is rotated to place the reaction tube next to the sample extraction unit, thereby the extracting system has a small footprint with minimal movement of a set of consumables, thereby reducing potential contamination during the extraction process.

5. The system of claim 4, wherein the set of consumables comprising: a set of samples, buffers, long, medium and short pipette tips, and a set of reaction tubes.

6. The system of claim 4, wherein the transferring unit have a sample tube rack, a reaction tube rack next to the sample tube rack and a waste unit next to the reaction tube rack and the sample tube rack.

7. The system of claim 4, wherein the sample is transferred from the sample tube to the reaction tube by a first pipette selected and grasped by the sample robot.

8. The system of claim 4, wherein the buffer and magnetic bead are transferred to the reaction tube by a second and third pipette selected and grasped by the reaction robot.

9. The system of claim 4, wherein the waste unit comprises of a set of bins connected through a set of opening.

10. The system of claim 4, wherein the rotary storage is rotatable about a vertical axis.

11. The system of claim 4, wherein the sample extraction unit comprises of a number of independent shakers installed on a number of magnet racks; each shaker has a shaking motor to integrate an orbital shaking.

12. The system of claim 4, wherein the system comprising of an upright frame divided by a horizontal platform into a top section and a bottom section, and wherein the storage unit and the waste unit are installed on the bottom section and the sample preparation and the sample extraction units are installed on the top section.

13. The system of claim 4, wherein the rotary storage system comprising of eight trays assembled in vertical position and wherein each tray comprising of five housing configured to receive five boxes in a total of forty boxes of the set of consumables.
